# EUROPEAN PATENT APPLICATION

(11) **EP 4 707 326 A1**
(43) Date of publication of application: **11.03.2026**
(21) Application number: 25200849.5
(22) Date of filing: 08.09.2025
(51) Int. Cl.: C08J 5/24, C08J 5/04

(54) **COMPOSITE MATERIAL CONTAINING WET-LAID NONWOVEN FABRIC AND METHOD FOR PRODUCING SAME**

(30) Priority: 10.09.2024 KR 20240123121
(71) Applicant: Hansol Chemical Co., Ltd, Seoul 06169 (KR)
(72) Inventor: PARK, Byung-Ju, 54524 Iksan-si, Jeonbuk-do (KR); AHN, Damiro, 54524 Iksan-si, Jeonbuk-do (KR); YANG, Seung-Woo, 54524 Iksan-si, Jeonbuk-do (KR); YUN, Young-Ho, 54524 Iksan-si, Jeonbuk-do (KR); KWON, Se-Man, 54524 Iksan-si, Jeonbuk-do (KR)
(74) Representative: Ipsilon

(57) **Abstract**

Proposed are a composite material containing inorganic fibers and a method for producing the same. A composite material according to the present disclosure produced by mixing a wet-laid nonwoven fabric including inorganic fibers with a resin can exhibit excellent physical properties in terms of tensile strength and flexural strength.

## Description

### BACKGROUND OF THE INVENTION

### Technical Field

The present disclosure relates to a composite material containing inorganic fibers and a method for producing the same. A composite material according to the present disclosure produced by mixing a wet-laid nonwoven fabric including inorganic fibers with a resin can exhibit excellent physical properties in terms of tensile strength and flexural strength.

### Description of the Related Art

Fiber-reinforced composite materials are manufactured using various fiber types as reinforcement. Common fibers include basalt, silicon/carbon (Si/C), glass, and carbon fibers. Of these, carbon fiber-reinforced plastics (CFRPs) consisting of carbon fibers exhibit high strength-to-weight ratio characteristics due to the excellent physical properties of carbon fibers, which have a specific strength about six times higher and a specific modulus about three times higher than those of steel. As a result, they are used in a wide range of application fields such as aircraft and wind turbine rotor blades.

In manufacturing fiber-reinforced composite materials, fibers in various textile forms such as dry-laid nonwoven fabrics, wet-laid nonwoven fabrics, chopped fibers, yarns, etc. can be used. Increasing the fiber amount generally enhances the strength of the composite material. However, using chopped fibers or dry-laid nonwoven fabrics has limitations in increasing the fiber amount, while employing yarns can lead to higher processing costs. Therefore, there is a need to manufacture highstrength composite materials using wet-laid nonwoven fabrics.

Moreover, with increasing concerns about environmental issues in recent years, research aimed at recovering and reusing carbon fibers from discarded CFRPs is growing, and the related market size is expanding rapidly.

### Documents of Related Art

(Patent Document 1) Korean Patent Application Publication No. 10-2018-0077909

### SUMMARY OF THE INVENTION

Accordingly, the present disclosure has been made keeping in mind the above problems occurring in the prior art, and one objective of the present disclosure is to provide a composite material produced by mixing a wet-laid nonwoven fabric including inorganic fibers with a resin and thus having improved performance characteristics (e.g., tensile strength and flexural strength), and a method for producing the same.

However, the objectives of the present disclosure are not limited to those mentioned above, and other objectives not mentioned above will be clearly understood by those skilled in the art from the following description.

In order to accomplish the above objective, according to one aspect of the present disclosure, there is provided a composite material, including: a wet-laid nonwoven fabric; and a resin, wherein the wet-laid nonwoven fabric may include inorganic fibers.

According to another aspect of the present disclosure, there is provided a method for producing a composite material, the method including: adding inorganic fibers, a wetting agent, and a dispersant to a solvent to prepare an inorganic fiber dispersion; removing the solvent from the prepared fiber dispersion and performing forming and drying to produce a wet-laid nonwoven fabric; and mixing the wet-laid nonwoven fabric with a resin to produce a prepreg.

The composite material according to the present disclosure exhibits high tensile strength and flexural strength, making it applicable in various fields requiring high mechanical strength. Furthermore, when using recycled fibers, it is possible to manufacture an environmentally friendly composite material.

### DESCRIPTION OF THE PREFERRED EMBODIMENTS

Hereinafter, the operation and effect of the present disclosure will be described in more detail by way of specific embodiments with reference to the drawings. However, these embodiments are merely presented for illustrative purposes only, and the scope of the present disclosure is not determined thereby.

Prior to describing the embodiments in detail, the terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the concept of the term to describe most appropriately the best method he or she knows for carrying out the present disclosure.

Therefore, since embodiments disclosed in this specification are merely preferred examples of the present disclosure and do not fully describe the technical idea of the present disclosure, it will be appreciated that there can be various equivalents and alterations thereto at a filing date of the present application.

As used herein, the singular forms "a", "an", and "the" are intended to include the plural forms as well, unless the context clearly indicates otherwise. It will be further understood that the terms "comprise", "include", "have", etc. when used in this specification, specify the presence of stated features, integers, steps, operations, elements, components, and/or combinations thereof but do not preclude the presence or addition of one or more other features, integers, steps, operations, elements, components, and/or combinations thereof.

In this specification, when various parameters are given as either a range, a preferred range, or a list of upper preferable values and/or lower preferable values, this is to be understood as specifically disclosing all ranges formed from any pair of any upper range limits or preferred values and any lower range limits or preferred values, regardless of whether the ranges are separately disclosed.

When a range of numerical values is recited herein, unless otherwise stated, the range is intended to include the endpoints thereof, and all integers and fractions within the range.

The scope of the present disclosure not be limited to specific values used in defining a range for a certain parameter.

As used herein to represent a specific numerical range, the expression "a to b" and "a-b" means "≥a and ≤b".

A composite material according to one aspect of the present disclosure may include: a wet-laid nonwoven fabric; and a resin, wherein the wet-laid nonwoven fabric may include inorganic fibers.

In one embodiment, the inorganic fibers may include basalt fibers, silicon/carbon (Si/C) fibers, glass fibers, carbon fibers, or a combination thereof.

For example, the composite material may include a wet-laid nonwoven fabric including carbon fibers and a resin.

In one embodiment, the inorganic fibers may include recycled fibers.

For example, the composite material may include a wet-laid nonwoven fabric including recycled fibers and a resin. At this time, all or some of the fibers included in the wet-laid nonwoven fabric may be recycled fibers.

For example, the composite material may include a wet-laid nonwoven fabric manufactured by mixing recycled fibers and virgin fibers, and a resin. At this time, the recycled fibers and the virgin fibers may be of the same type or different types of fibers, and each of the recycled fibers and the virgin fibers may also be a mixture of the same type or different types of fibers.

For example, the composite material may include recycled carbon fibers and virgin glass fibers.

As another example, the composite material may include recycled carbon fibers and virgin carbon fibers.

As another example, the composite material may include recycled carbon fibers, virgin carbon fibers, recycled glass fibers, virgin glass fibers, virgin silicone/carbon fibers, or a combination thereof.

In one embodiment, the inorganic fibers may have an average length of equal to or greater than 20 mm.

For example, the average length of the inorganic fibers may be 20 to 200 mm, 25 to 180 mm, 30 to 160 mm, 33 to 150 mm, 35 to 140 mm, 37 to 130 mm, 39 to 120 mm, 41 to 110 mm, 43 to 90 mm, or 45 to 70 mm.

When the average length of the inorganic fibers exceeds the above range, the dispersibility may be low, resulting in the manufactured composite material not having uniform physical properties. In particular, the stress of the manufactured composite material may be non-uniform, leading to reduced strength.

Additionally, when the average length of the inorganic fibers falls below the above range, the strength of the manufactured composite material may be low, and there may be a limitation in increasing the resin amount beyond a predetermined level.

In one embodiment, the resin included in the composite material may be an epoxy resin, a phenolic resin, a polyester resin, a silicone resin, a polyethylene resin, a polypropylene resin, a polystyrene resin, a polycarbonate resin, a polyamide resin, a polyurethane resin, or a combination thereof.

For example, an epoxy resin may be used alone, or a combination of an epoxy resin and a phenolic resin may be used.

Additionally, as presented by the above embodiment, the resin included in the composite material of the present disclosure is not limited to either a thermosetting or a thermoplastic type.

In one embodiment, the wet-laid nonwoven fabric may further include a sizing agent. When the sizing agent is additionally included, the sizing agent may be present in an amount of 0.1 to 10 wt%, based on a total of 100 wt% of the wet-laid nonwoven fabric.

For example, the sizing agent may be present in an amount of 0.1 to 10 wt%, 0.5 to 9.5 wt%, 1 to 9 wt%, 2 to 8 wt%, 3 to 7 wt%, or 4 to 6 wt%, based on a total of 100 wt% of the wet-laid nonwoven fabric.

Additionally, the wet-laid nonwoven fabric may not include the sizing agent.

When the amount of the sizing agent exceeds the above range, compatibility with resins may decrease, leading to a deterioration in the physical properties of the manufactured composite material.

When the sizing agent is additionally included, compatibility with certain resins may be improved. The sizing agent may be applied by impregnating the wet-laid nonwoven fabric with distilled water or ethanol diluted with the sizing agent.

According to the present disclosure, the length of the inorganic fibers is sufficiently long to secure wet strength, thereby making it possible to impregnate the wet-laid nonwoven fabric with the sizing agent even when the sizing agent is dissolved in water or ethanol.

In one embodiment, the wet-laid nonwoven fabric may have an average pore size of equal to or greater than 10 µm as measured by a Pore size Measurement Instrument (PMI) analysis according to ASTM F316.

For example, the average pore size of the wet-laid nonwoven fabric, measured by PMI analysis according to ASTM F316, may be 10 to 50 µm, 15 to 45 µm, or 20 to 40 µm.

In one embodiment, the wet-laid nonwoven fabric may have a maximum pore size of equal to or greater than 20 µm as measured by PMI analysis according to ASTM F316.

For example, the maximum pore size of the wet-laid nonwoven fabric, measured by PMI analysis according to ASTM F316, may be 20 to 100 µm, 40 to 85 µm, 60 to 80 µm, or 70 to 75 µm.

In one embodiment, the wet-laid nonwoven fabric may have a weight retention of equal to or greater than 90% as measured by thermogravimetric analysis (TGA) according to KS M ISO 11358-1.

For example, the weight retention of the wet-laid nonwoven fabric, measured by thermogravimetric analysis (TGA) according to KS M ISO 11358-1, may be 90% to 99%, 91% to 98%, or 92% to 97%.

In one embodiment, the wet-nonwoven fabric may have a machine direction (MD) tensile strength of equal to or greater than 30 N as measured at a test speed of 100 mm/min according to KS K ISO 9073-3, and a cross direction (CD) tensile strength of equal to or greater than 30 N as measured at a test speed of 100 mm/min according to KS K ISO 9073-3.

For example, the machine direction (MD) tensile strength of the wet-laid nonwoven fabric, measured at a test speed of 100 mm/min according to KS K ISO 9073-3, may be 30 to 300 N, 60 to 290 N, 90 to 280 N, 120 to 270 N, 150 to 260 N, or 170 to 250 N.

Additionally, the cross direction (CD) tensile strength of the wet-laid nonwoven fabric, measured at a test speed of 100 mm/min according to KS K ISO 9073-3, may be 30 to 180 N, 40 to 170 N, 50 to 160 N, 60 to 150 N, 70 to 140 N, 80 to 130 N, or 90 to 120 N.

In one embodiment, a ratio of the machine direction (MD) tensile strength to the cross direction (CD) tensile strength of the wet-laid nonwoven fabric, both measured according to KS K ISO 9073-3, may be equal to or less than 3.5.

For example, the ratio of the machine direction (MD) tensile strength to the cross direction (CD) tensile strength of the wet-laid nonwoven fabric, both measured according to KS K ISO 9073-3, may be 0.5 to 3.4, 0.6 to 3.3, 0.7 to 3.2, 0.8 to 3.1, 0.9 to 3.0, 1.0 to 2.9, 1.1 to 2.8, 1.2 to 2.7, 1.3 to 2.6, 1.4 to 2.5, or 1.5 to 2.4.

In one embodiment, the wet-laid nonwoven fabric may have a bursting strength of equal to or greater than 50 kPa as measured at a hydraulic pressure increase rate of 98 mL/min according to KS K 0642 8.18.1 A.

For example, the bursting strength of the wet-laid nonwoven fabric, measured at a hydraulic pressure increase rate of 98 mL/min according to KS K0642 8.18.1 A, may be 55 to 240 kPa, 70 to 230 kPa, 90 to 220 kPa, 110 to 210 kPa, 130 to 200 kPa, 140 to 190 kPa, 150 to 180 kPa, or 155 to 170 kPa.

In one embodiment, a weight ratio of the inorganic fibers to the resin in the composite material may be 1:99 to 70:30.

For example, the weight ratio of the inorganic fibers to the resin in the composite material may be 5:95, 15:85, 25:75, 35:65, 45:55, 55:45, or 65:35.

At this time, the higher the weight ratio of the inorganic fibers relative to the resin, the greater the strength of the manufactured composite material may be.

In one embodiment, the composite material may have a tensile strength of equal to or greater than 80 MPa as measured according to ASTM D3039/D3039M-17.

For example, the tensile strength of the composite material, measured according to ASTM D3039/D3039M-17, may be 85 to 560 MPa, 90 to 550 MPa, 100 to 540 MPa, 110 to 530 MPa, or 115 to 520 MPa.

In one embodiment, the composite material may have a flexural strength of equal to or greater than 50 MPa as measured according to ASTM D790-17.

For example, the flexural strength of the composite material, measured according to ASTM D790-17, may be 50 to 700 MPa, 70 to 690 MPa, 90 to 680 MPa, 110 to 670 MPa, 130 to 660 MPa, 140 to 650 MPa, 150 to 640 MPa, 160 to 630 MPa, or 170 to 620 MPa.

A method for producing a composite material according to another aspect of the present disclosure may include: adding inorganic fibers, a wetting agent, and a dispersant to a solvent to prepare an inorganic fiber dispersion; removing the solvent from the prepared fiber dispersion and performing forming and drying to produce a wet-laid nonwoven fabric; and mixing the wet-laid nonwoven fabric with a resin to produce a prepreg.

In the present disclosure, the wet-laid nonwoven fabric may not include a binder. When the binder is included in the production of the wet-laid nonwoven fabric, the binder and the dispersant may react and form salts, generating contaminants or the salts may make it disadvantageous to reuse the dispersant.

In the method for producing the composite material, the solvent may be distilled water or alcohol. However, in view of cost and processability, it is preferable to use distilled water.

In the method for producing the composite material, the wetting agent may serve to introduce hydrophilic groups onto the surface of hydrophobic fibers to form hydrogen bonds with a hydrophilic solvent, thereby enabling dispersion of the fibers in water and improving compatibility with the solvent.

In the present disclosure, the wetting agent may be a cationic surfactant, an anionic surfactant, a nonionic surfactant, or a combination thereof. Specifically, it may be an ethylene oxide (EO)/propylene oxide (PO) copolymer surfactant, a polyethylene oxide (PEO) surfactant, a polyethylene glycol (PEG) surfactant, or a combination thereof.

In the method for producing the composite material, the dispersant may serve to impart anionic properties to the inorganic fibers, thereby preventing the inorganic fibers from clumping together due to electrostatic repulsion and steric hindrance between the inorganic fibers, and enabling them to be evenly distributed in a solvent. When adding the dispersant, a predetermined amount of solvent may be added to ensure that the dispersant mixes thoroughly and disperses the inorganic fibers appropriately.

In the present disclosure, the term "prepreg" may refer to a molding material in which a matrix resin is preliminarily impregnated into reinforcing fibers.

In one embodiment, the mixing of the wet-laid nonwoven fabric with the resin to produce the prepreg may include a hot melt method, a solution impregnation method, or a combination thereof.

The hot melt method may refer to a method in which a release paper coated with a resin is brought into contact with inorganic fibers and then the materials are heated and pressed together to melt the resin and allow it to penetrate the inorganic fibers.

The solution impregnation method may refer to a method in which inorganic fibers are immersed in a resin to allow the resin to penetrate the inorganic fibers.

In one embodiment, the method for producing the composite material may further include: adding a sizing agent after the producing of the wet-laid nonwoven fabric. When the sizing agent is additionally included, the sizing agent may be present in an amount of 0.1 to 10 wt%, based on a total of 100 wt% of the wet-laid nonwoven fabric.

For example, the sizing agent may be present in an amount of 0.1 to 10 wt%, 0.5 to 9.5 wt%, 1 to 9 wt%, 2 to 8 wt%, 3 to 7 wt%, or 4 to 6 wt%, based on a total of 100 wt% of the wet-laid nonwoven fabric.

Additionally, the wet-laid nonwoven fabric may not include the sizing agent.

When the amount of the sizing agent exceeds the above range, compatibility with resins may decrease, leading to a deterioration in the physical properties of the manufactured composite material.

When the sizing agent is additionally included, compatibility with certain resins may be improved. The sizing agent may be applied by impregnating the wet-laid nonwoven fabric with distilled water or ethanol diluted with the sizing agent.

According to the present disclosure, the length of the inorganic fibers is sufficiently long to secure wet strength, thereby making it possible to impregnate the wet-laid nonwoven fabric with the sizing agent even when the sizing agent is dissolved in water or ethanol.

In one embodiment, the method for producing the composite material may further include: stacking one or more layers of the prepreg and performing molding, cooling, and demolding.

In one embodiment, the molding step may be performed at a temperature of 80°C to 350°C and a pressure of equal to or greater than 0.5 MPa.

For example, the temperature of the molding step may be 80°C to 350°C, 90°C to 320°C, 100°C to 290°C, 110°C to 260°C, or 120°C to 230°C.

When the temperature of the molding step exceeds the above range, thermosetting resins may decompose, leading to a compromised composite material with undesirable quality. Whereas, when the temperature of the molding step falls below the above range, thermosetting resins may not cure properly.

Hereinafter, the present disclosure will be described in more detail by way of manufacture examples and examples, but the present disclosure is not limited thereto.

### Preparation Example 1: Production of Wet-Laid Nonwoven Fabric Using 50 mm Carbon Fibers

Hereinafter, wt % is based on a total weight of 2,500g.

0.15 wt% of 50 mm carbon fibers (from Zolteck) and 0.15 wt% of a nonionic surfactant-based wetting agent were added to a solvent (water, 492.5 g) and mixed. The resultant was then subjected to pre-wetting using a pulper at about 1,000 rpm to prepare a pre-wetting solution.

Subsequently, 0.6 wt% of an acrylic dispersant (CDS-3000P, from Hansol) was dissolved in a solvent (water, about 1977.5 g), after which 500 g of the pre-wetting solution was added. The mixed solution was stirred at a low speed of about 250 to 350 rpm using an impeller designed to minimize vortex formation, thereby preparing a carbon fiber dispersion.

The prepared carbon fiber dispersion was formed into a sheet using a 25 x 25 cm² sheet machine. The formed sheet was then dried in a hot-air drying oven at 120°C for about 30 minutes, thereby producing a carbon fiber wet-laid nonwoven fabric with a basis weight after drying of 60 g/m² and a thickness of 512 µm.

The wet-laid nonwoven fabric produced according to Preparation Example 1 had a thickness of 153 µm when compressed at 2 MPa, a bulk density of 0.11 g/m³ before compression, an average pore size of 37.2 µm and a maximum pore size of 71 µm as measured by Pore size Measurement Instrument (PMI) analysis, and a weight retention of 92.5% as measured by thermogravimetric analysis (TGA). The measurement methods are shown below.

Pore size analysis method: ASTM F316

Weight retention measurement method: KS M ISO 11358-1

### Preparation Example 2: Production of Wet-Laid Nonwoven Fabric Using 12 mm Carbon Fibers

A carbon fiber wet-laid nonwoven fabric having a basis weight after drying of 60 g/m² and a thickness of 485 µm was produced in the same manner as in Preparation Example 1, except that 12 mm carbon fibers were used.

The wet-laid nonwoven fabric produced according to Preparation Example 2 had a thickness of 150 µm when compressed at 2 MPa, a bulk density of 0.13 g/m³ before compression, an average pore size of 34.2 µm and a maximum pore size of 65.5 µm as measured by Pore size Measurement Instrument (PMI) analysis, and a weight retention of 91.1% as measured by thermogravimetric analysis (TGA). The measurements were performed using the same measurement methods as those of Preparation Example 1.

### Example 1: Production of Composite Material Using 50 mm Carbon Fibers (Fiber:Resin=10:90)

A wet-laid nonwoven fabric produced according to Preparation Example 1 and an epoxy resin were adjusted to a weight ratio of 10:90 and then mixed using a hot melt method to produce a prepreg.

The prepreg was stacked in eight layers, and the stacked prepregs were molded at a temperature of 150°C and a pressure of 20 MPa. After cooling to 25°C, the molded product was removed from a mold to obtain a composite material.

### Example 2: Production of Composite Material Using 50 mm Carbon Fibers (Fiber:Resin=50:50)

A composite material was produced in the same manner as in Example 1, except that a fiber to resin weight ratio was adjusted to 50:50.

### Comparative Example 1: Production of Composite Material Using 12 mm Carbon Fibers (Fiber:Resin=10:90)

A composite material was produced in the same manner as in Example 1, except that a wet-laid nonwoven fabric produced according to Preparation Example 2 was used.

### Comparative Example 2: Production of Composite Material Using 12 mm Carbon Fibers (Fiber:Resin=50:50)

The same procedure was carried out as in Comparative Example 1, except that a fiber to resin weight ratio was adjusted to 50:50. In the case of Comparative Example 2, it was found that a composite material could not be manufactured.

### Evaluation Example 1: Evaluation of Physical Properties of Wet-Laid Nonwoven Fabric

The physical properties (tensile properties) of the wet-laid nonwoven fabrics produced in Preparation Examples 1 and 2 were measured and the results are shown in Table 1 below.

**Table 1**

| Item | Unit | Preparation Example 1 | Preparation Example 2 |
|---|---|---|---|
| Weight | g/m² | 60 | 60 |
| Tensile strength (MD) | N | 205 | 66 |
| Tensile strength (CD) | N | 107 | 17 |
| Tensile strength ratio (MD/CD) | - | 1.96 | 3.88 |
| Bursting strength | kPa | 158 | 60 |

In Table 1 above, MD refers to a machine direction, and CD refers to a cross direction. The measurement methods for tensile strength and bursting strength and the measurement conditions are shown below.

Tensile strength measurement method: KS K ISO 9073-3, specimen: 50 mm, grip length: 100 mm, test speed: 100 mm/min

Bursting strength measurement method: KS K 0642 8.18.1 A, hydraulic pressure increase rate: 98 mL/min

The weight of each Preparation Example was set to be the same. From the measurement results, it was found that Preparation Example 1 exhibited higher tensile strength and burst strength in both the machine direction (MD) and the cross direction (CD), compared to Preparation Example 2.

However, the tensile strength ratio (MD/CD) was higher in Preparation Example 2 than in Preparation Example 1.

### Evaluation Example 2: Evaluation of Physical Properties of Composite Material

The physical properties of Example 1, Example 2, and Comparative Example 1 were measured and the results are shown in Table 2 below. In the case of Comparative Example 2, the physical properties could not be measured as the composite material was not successfully produced.

**Table 2**

| | Density | Tensile strength (MPa) | Flexural strength (MPa) |
|---|---|---|---|
| Example 1 | 1.13 | 121 | 213 |
| Example 2 | 1.45 | 420 | 602 |
| Comparative Example 1 | 1.14 | 62 | 88 |

In Evaluation Example 2, the tensile strength was measured in accordance with ASTM D3039/D3039M-17, and the flexural strength was measured in accordance with ASTM D790-17.

From the measurement results, it was found that compared to the composite material of Comparative Example 1, which was manufactured using 12 mm carbon fibers, the composite materials of Example 1 and Example 2, which were manufactured using 50 mm carbon fibers, exhibited higher tensile and flexural strengths.

Additionally, it was found that Example 2, which contained a higher amount of carbon fibers, exhibited higher tensile and flexural strengths compared to Example 1.

The scope of the present disclosure is defined by the appended claims rather than the above detailed description, and all changes or modifications derived from the meaning and range of the appended claims and equivalents thereof are to be interpreted as being included within the scope of present disclosure.

## Claims

1. A composite material, comprising:
a wet-laid nonwoven fabric; and
a resin,
wherein the wet-laid nonwoven fabric includes inorganic fibers.

2. The composite material of claim 1, wherein the inorganic fibers include basalt fibers, silicon/carbon (Si/C) fibers, glass fibers, carbon fibers, or a combination thereof.

3. The composite material of claim 1, wherein the inorganic fibers include recycled fibers.

4. The composite material of claim 1, wherein the inorganic fibers have an average length of equal to or greater than 20 mm.

5. The composite material of claim 1, wherein the resin includes an epoxy resin, a phenolic resin, a polyester resin, a silicone resin, a polyethylene resin, a polypropylene resin, a polystyrene resin, a polycarbonate resin, a polyamide resin, a polyurethane resin, or a combination thereof.

6. The composite material of claim 1, wherein the wet-laid nonwoven fabric has an average pore size of equal to or greater than 10 µm as measured by a Pore size Measurement Instrument (PMI) analysis according to ASTM F316.

7. The composite material of claim 1, wherein the wet-laid nonwoven fabric has a weight retention of equal to or greater than 90% as measured by thermogravimetric analysis (TGA) according to KS M ISO 11358-1.

8. The composite material of claim 1, wherein the wet-nonwoven fabric has a machine direction (MD) tensile strength of equal to or greater than 30 N as measured at a test speed of 100 mm/min according to KS K ISO 9073-3, and a cross direction (CD) tensile strength of equal to or greater than 30 N as measured at a test speed of 100 mm/min according to KS K ISO 9073-3.

9. The composite material of claim 1, wherein the wet-laid nonwoven fabric has a bursting strength of equal to or greater than 50 kPa as measured at a hydraulic pressure increase rate of 98 mL/min according to KS K 0642 8.18.1 A.

10. The composite material of claim 1, wherein a weight ratio of the inorganic fibers to the resin is 1:99 to 70:30.

11. The composite material of claim 1, wherein the composite material has a tensile strength of equal to or greater than 80 MPa as measured according to ASTM D3039/D3039M-17.

12. The composite material of claim 1, wherein the composite material has a flexural strength of equal to or greater than 50 MPa as measured according to ASTM D790-17.

13. A method for producing a composite material, the method comprising:
adding inorganic fibers, a wetting agent, and a dispersant to a solvent to prepare an inorganic fiber dispersion;
removing the solvent from the prepared fiber dispersion and performing forming and drying to produce a wet-laid nonwoven fabric; and
mixing the wet-laid nonwoven fabric with a resin to produce a prepreg.

14. The method of claim 13, wherein the mixing of the wet-laid nonwoven fabric with the resin to produce the prepreg includes a hot melt method, a solution impregnation method, or a combination thereof.

15. The method of claim 13, further comprising:
stacking one or more layers of the prepreg and performing molding, cooling, and demolding.
